# EUROPEAN PATENT SPECIFICATION

(11) **EP 3 586 485 B1**
(45) Date of publication and mention of the grant of the patent: **22.09.2021**
(21) Application number: 17710407.2
(22) Date of filing: 27.02.2017
(51) Int. Cl.: H04L 29/06

(54) **FIREWALL RULE SET COMPOSITION AND DECOMPOSITION**
REGELSATZZUSAMMENSETZUNG UND -ZERLEGUNG FÜR FIREWALL
COMPOSITION ET DÉCOMPOSITION D'ENSEMBLE DE RÈGLES DE PARE-FEU

(43) Date of publication of application: 01.01.2020
(73) Proprietor: Telefonaktiebolaget LM Ericsson (publ.), 16483 Stockholm (SE)
(72) Inventor: POURZANDI, Makan, Montreal Québec H4A 2L1 (CA); CHERIET, Mohamed, Montreal Québec H3C 1K3 (CA); JARRAYA, Yosr, Montreal Québec H1Y 2G1 (CA); MIGAULT, Daniel, Montreal Québec H2R 2S7 (CA); SHAMELI-SENDI, Alireza, Montreal Québec H3V 1G1 (CA)
(74) Representative: Ericsson
(86) International application number: PCT/IB2017/051150
(87) International publication number: WO 2018/154365

(56) References cited:
- US-A1- 2009 172 800
- US-A1- 2011 055 916
- US-A1- 2016 294 772
- US-A1- 2017 005 867
- GUANHUA YAN ET AL: "Dynamic Balancing of Packet Filtering Workloads on Distributed Firewalls", QUALITY OF SERVICE, 2008. IWQOS 2008. 16TH INTERNATIONAL WORKSHOP ON, IEEE, PISCATAWAY, NJ, USA, 2 June 2008 (2008-06-02), pages 209-218, XP031270241, ISBN: 978-1-4244-2084-1

## Description

### TECHNICAL FIELD

The present disclosure generally relates to communication networks and firewalling in such networks.

### BACKGROUND

Security mechanisms such as firewalls are generally deployed for securing networks as a first line of defense against malicious traffic. A security device can be used to check ingress and/or egress packets to decide whether to accept or reject a packet based on a security policy. The term "firewall" broadly refers to a network security mechanism implemented in hardware and/or software and configured to detect suspicious or unauthorized activity based on analyzing the network traffic passing through the firewall.

For a given user equipment (UE) or wireless device, its firewall can establish a secure boundary between the device and other devices and/or systems, based on analyzing the traffic going between the device and the supporting communication network. It will be appreciated that this traffic generally is pass-through traffic with respect to the wired or wireless communication network, with the firewalled device as one endpoint and some device or system in an external network as the other endpoint.

Under an increased volume of traffic, a firewall may slow down or prevent access to the device or network placed behind. As all network traffic typically must first pass through the firewall, such architectures can cause firewalls to be an interesting target for disrupting service. It is common that the deployment of web services attracts more attention than the firewall, thus making the firewall the first element to fall under heavy web traffic. As such, firewall performance can be a major factor for service availability.

The publication "Dynamic Balancing of Packet Filtering Workloads on Distributed Firewalls" by Guanhua Yan et al., IWQOS 2008, ISBN 978-1-4244-2084-1 discloses a method of protecting firewalls from being overloaded. Once hit counts per rule have been collected from all firewalls, a new rule distribution matrix is computed and used to reconfigure the rules on each firewall.

### SUMMARY

It is an object of the present disclosure to obviate or mitigate at least one disadvantage of the prior art.

In a first aspect of the present disclosure, there is provided a method for managing firewall rules in a distributed firewall system comprising a plurality of firewall devices in a plurality of network domains. The method includes compiling usage statistics for each rule in a set of rules at a first firewall device in a first domain. A first subset of rules is identified to be removed from the first firewall device and to be added to a second firewall device in a second domain. A second subset of rules is identified to be duplicated from the first firewall device to the second firewall device. An instruction is transmitted to add the first and second subsets of rules to the second firewall device. Usage statistics associated with the first and second subsets of rules are synchronized between the first firewall device and the second firewall device, and the second firewall device is configured.

In a second aspect of the present disclosure, there is provided a firewall manager comprising circuitry including a processor and a memory. The memory contains instructions executable by the processor whereby the firewall manager is operative to compile usage statistics for each rule in a set of rules at a first firewall device in a first domain. The firewall manager identifies a first subset of rules to be removed from the first firewall device and to be added to a second firewall device in a second domain, and identifies a second subset of rules to be duplicated from the first firewall device to the second firewall device. The firewall manager transmits an instruction to add the first and second subsets of rules to the second firewall device. Usage statistics associated with the first and second subsets of rules are synchronized between the first firewall device and the second firewall device. The second firewall device is configured.

In another aspect of the present invention, there is provided a firewall manager comprising a statistics module, a rule identifying module, a transmitting module and a configuring module. The statistics module is configured for compiling usage statistics for each rule in a set of rules at a first firewall device in a first domain. The rule identifying module is configured for identifying a first subset of rules to be removed from the first firewall device and to be added to a second firewall device in a second domain, and for identifying a second subset of rules to be duplicated from the first firewall device to the second firewall device. The transmitting module is configured for transmitting instruction to insert the first and second subsets of rules at the second firewall device. The configuring module is configured for configuring the second firewall device. In some embodiments, statistics module is further configured to synchronize usage statistics associated with the first and second subsets of rules between the first firewall device and the second firewall device.

In some embodiments, it is determined that the second firewall device is required in the second domain. The determination that the second firewall device is required in the second domain can be responsive to detecting at least one of a traffic variation and a rule matching variation associated with the second domain.

In some embodiments, the first subset of rules can be identified in accordance with being uniquely associated with traffic associated with the second domain. The second subset of rules can be identified in accordance with being common to all of the firewall devices in the network.

In some embodiments, synchronizing usage statistics includes transmitting the usage statistics associated with the first subset of rules to the second firewall device. Synchronizing usage statistics can further include removing the usage statistics associated with first subset of rules from the first firewall device. In some embodiments, synchronizing usage statistics includes modifying the usage statistics associated with the second subset of rules, stored at the first firewall device, to remove usage statistics uniquely associated with traffic from the second domain. Synchronizing usage statistics can further include transmitting, to the second firewall device, usage statistics associated with the second subset of rules uniquely associated with traffic from the second domain.

In some embodiments, configuring the second firewall device includes creating the second firewall device at the second domain. Configuring the second firewall device can include configuring an order of the rules at the second firewall device in accordance with the synchronized usage statistics.

In some embodiments, an instruction is transmitted to remove the first subset of rules from the first firewall device. The set of rules at the first firewall device can be reordered in accordance with the synchronized usage statistics.

In some embodiments, the first firewall device is a centralized firewall and the second firewall device is a distributed firewall.

The various aspects and embodiments described herein can be combined alternatively, optionally and/or in addition to one another.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached Figures, wherein:
Figure 1 illustrates an example wireless network;
Figure 2 illustrates an example network architecture;
Figure 3 illustrates an example security orchestrator;
Figure 4 is a flow chart illustrating an example firewall decomposition process;
Figures 5a and 5b illustrate an example decomposed rule set;
Figure 6 is a flow chart illustrating an example firewall composition process;
Figure 7 is a flow chart illustrating a method for managing firewall rules;
Figure 8 is a block diagram of an example firewall manager; and
Figure 9 is a block diagram of an example firewall manager with modules.

### DETAILED DESCRIPTION

The embodiments set forth below represent information to enable those skilled in the art to practice the embodiments. Upon reading the following description in light of the accompanying drawing figures, those skilled in the art will understand the concepts of the description and will recognize applications of these concepts not particularly addressed herein. It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

In some embodiments, the non-limiting term "user equipment" (UE) is used and it can refer to any type of wireless device which can communicate with a network node and/or with another UE in a cellular or mobile or wireless communication system. Examples of UE are target device, device to device (D2D) UE, machine type UE or UE capable of machine to machine (M2M) communication, personal digital assistant, tablet, mobile terminal, smart phone, laptop embedded equipped (LEE), laptop mounted equipment (LME), USB dongles, ProSe UE, V2V UE, V2X UE, MTC UE, eMTC UE, FeMTC UE, UE Cat 0, UE Cat M1, narrow band IoT (NB-IoT) UE, UE Cat NB1, etc.

In some embodiments, the non-limiting term "network node" is used and it can correspond to any type of radio access node (or radio network node) or any network node, which can communicate with a UE and/or with another network node in a cellular or mobile or wireless communication system. Examples of network nodes are NodeB, MeNB, SeNB, a network node belonging to MCG or SCG, base station (BS), multi-standard radio (MSR) radio access node such as MSR BS, eNodeB, network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME, etc.), O&M, OSS, Self-organizing Network (SON), positioning node (e.g. E-SMLC), MDT, test equipment, etc.

In some embodiments, the term "radio access technology" (RAT) refers to any RAT e.g. UTRA, E-UTRA, narrow band internet of things (NB-IoT), WiFi, Bluetooth, next generation RAT (NR), 4G, 5G, etc. Any of the first and the second nodes may be capable of supporting a single or multiple RATs.

The term "radio node" used herein can be used to denote a UE or a network node.

Typically, firewall rule definitions include the following five tuples: source address, source port, destination address, destination port, and upper layer information, in addition to an action. Each tuple specifies a set of identifiers that provide acceptable values for the tuple. These rules can be deployed as a centralized (e.g. "macro") firewall or a distributed (e.g. "micro") firewalls or as combination of the two. A centralized firewall is often a choke point solutions, as it serves as a single choke point for enforcing all firewall rules because all traffic has to pass it. Distributed firewalls can be implemented, for example, as service node firewalls, distributed among a plurality of nodes and/or domains in the network.

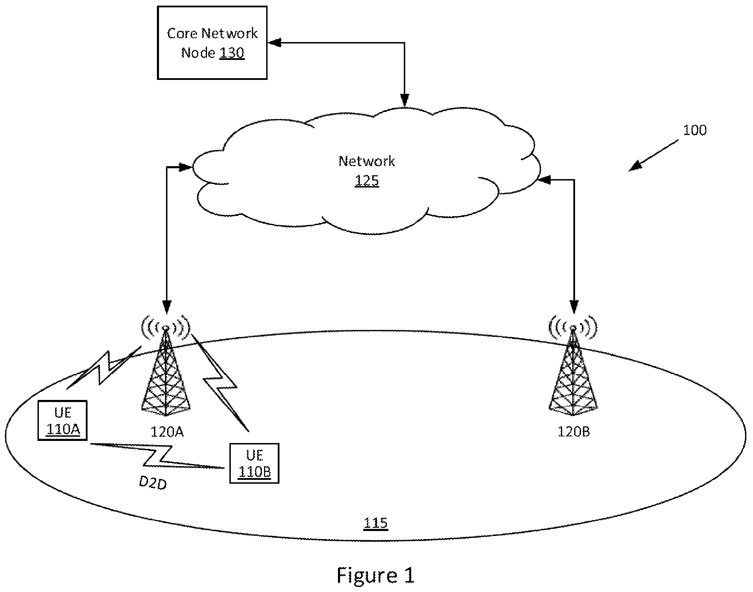

Figure 1 illustrates an example of a wireless network 100 that can be used for wireless communications. Wireless network 100 includes UEs 110A-110B and a plurality of network nodes, such as radio access nodes 120A-120B (e.g. eNBs, gNBs, etc.) connected to one or more core network nodes 130 via an interconnecting network 125. The network 100 can use any suitable deployment scenarios. UEs 110 within coverage area 115 can each be capable of communicating directly with radio access nodes 120 over a wireless interface. In some embodiments, UEs 110 can also be capable of communicating with each other via D2D communication.

As an example, UE 110A can communicate with radio access node 120A over a wireless interface. That is, UE 110A can transmit wireless signals to and/or receive wireless signals from radio access node 120A. The wireless signals can contain voice traffic, data traffic, control signals, and/or any other suitable information. In some embodiments, an area of wireless signal coverage associated with a radio access node 120 can be referred to as a cell.

For network security, a central firewall can be deployed in the "cloud" 125, while distributed firewalls can be deployed at "cloudlets" which can be located, for example, at some or all of the network nodes 120A-120B. In some embodiments, distributed firewalls can further be deployed on at least some of the UEs 110-110B.

As previously discussed, the deployment of a centralized firewall can lead to a bottleneck architecture for heavy traffic (e.g. DDoS) and it may be difficult to guarantee QoS requirements for all other normal traffic. Techniques can be provided so that the firewall can treat the traffic at any time without introducing any noticeable delays, for example by dynamically scaling in and out firewalls for a more efficient rule matching processing time. This approach may suffer some limitations. First, duplication of firewalls instances in the cloud is not efficient from resource utilization point of view. More specifically, a single instance of firewall is typically overloaded due to a suboptimal use of its resources. The firewall rules are placed in an ordered list and popular matching rules placed at the bottom can lead to unnecessary checks. As a result, duplicating the firewall instances may address QoS requirements but at the expenses of engaging a large amount of resources. Second, applying security policies at the destination requires the packet to be carried close to the destination. In the case of illegitimated traffic dropped, this results in a suboptimal use of the bandwidth between the source and the destination of the heavy traffic. Finally, since all duplicated firewalls have the same polices, all of them require updating when the policies are updated, for example, when a rule reordering is performed for optimization.

Rule-based firewalls are widely deployed and an improper ordering of rules can also become a performance bottleneck. For instance, if rarely triggered rules are placed in the beginning of the ordered list, they will be checked unnecessarily frequently. Thus, the traffic characteristics (e.g. load, speed, etc.) should be analyzed to determine the rules matching frequency. Consequently, firewall rules can be ordered adaptively to avoid performance degradations due to traffic changes. This is commonly referred to as the optimal rule ordering (ORO) optimization problem. It can be costly in terms of resources to update the rule ordering dynamically with respect to the traffic loads.

Conventional approaches to ORO consider that the full set of rules remains constant, or static, in a particular firewall. The full set of rules may be duplicated and shared in a distributed firewall environment. But typically, it is assumed that the firewall policies cannot be shared across domains due to containing confidential information. Accordingly, conventional approaches do not consider cross-domain traffic in order to export sets or subsets of rules outside the firewall. This can limit the extensibility of their approach to modern networks employing Virtual Network Functions (VNF) and Software Defined Networking (SDN).

Embodiments of the present disclosure are directed towards systems and methods for decomposing and composing firewall security rules across domains in a distributed network environment (e.g. a cloud and a set of cloudlets requesting a service hosted in the cloud) based on traffic characteristics.

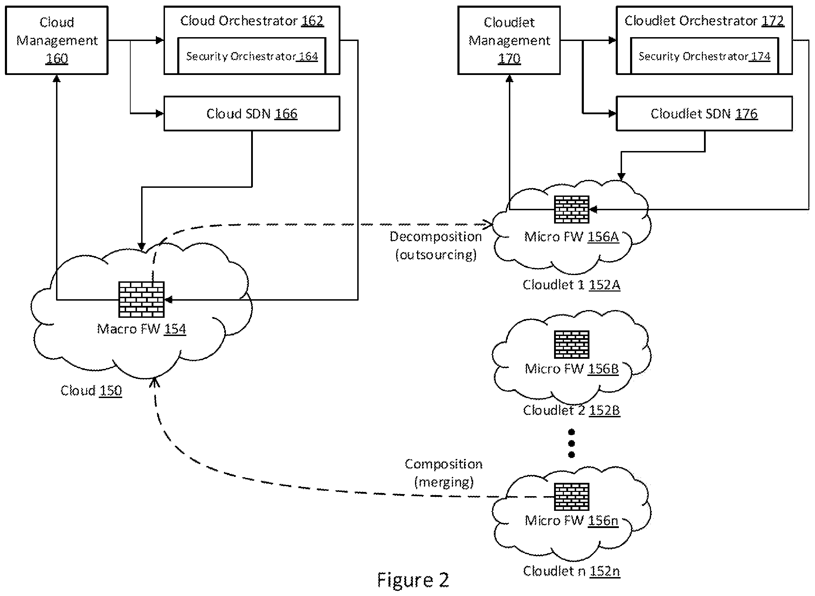

Figure 2 illustrates an example network architecture. It will be appreciated that, although Figure 2 refers to the cloud 150 and cloudlet 152A-152N architecture, similar techniques can be applied to a network comprising a plurality of different domains. For example, Cloud 150 can be a first domain, Cloudlet 1 152A can be a second domain, Cloudlet 2 152B can be a third domain, and so on. For illustrative purposes, the firewall device located in Cloud 150 will be referred to as macro firewall 154 and the firewall devices located in Cloudlets 1-n 152A-152n will be referred to as micro firewalls 156A-156n.

The cloud and cloudlet domains can each include Management, Orchestration and SDN components. For example, cloud 150 includes Cloud Management 160, Cloud Orchestrator 162 and Cloud SDN Controller (and associated SDN components) 166. Cloudlet 152A includes Cloudlet Management 170, Cloudlet Orchestrator 172 and Cloudlet SDN Controller (and associated SDN components) 176.

A security orchestrator 162/172 is located in each of the cloud and cloudlet domains. In some embodiments, the security orchestrator is essentially the distributed firewall management component. At the cloud 150 domain, the security orchestrator 164 has the decomposition/composition controllers to determine when to outsource/merge the firewall rules between macro or micro firewalls. Similarly, at the cloudlet 152A domain, the security orchestrator 174 has the composition/decomposition controllers to cooperate in composition and decomposition processes initiated by either of the cloud 150 or cloudlet 152A.

It will be appreciated that the various embodiments described herein can be applicable to different types of networks and architectures beyond the non-limiting examples shown in Figures 1 and 2.

Different types of measures can be used to trigger decomposition/composition operations such as the rules hit frequency, the traffic characteristics for traffic coming from different cloudlets, etc. When a high volume of traffic is detected from a particular cloudlet, the decomposition process can be used to outsource the rule(s) for that cloudlet to a micro firewall in the cloudlet. When the traffic volume returns to the normal level for the cloudlet (e.g. there is no need to maintain the micro firewall), the composition process can be used to remove the micro firewall from the cloudlet and return any outsourced rule(s) to the macro firewall in the cloud.

For each decomposition/composition request, the cloud and cloudlet security orchestrators can negotiate to ensure the necessary actions occur, for example, to add/remove the micro firewall and also to activate/deactivate the new/old optimal routing paths.

The cloud security orchestrator connected to the macro firewall receives all rule usage statistics from the macro firewall (or from the micro firewalls through their relative cloudlet security orchestrators). It can then pass this information to the decomposition controller (or composition controller) to decide whether to perform a decomposition (or composition) action. For example, traffic originating from a cloudlet (or from different IP addresses in a cloudlet) may trigger a specific rule in the macro firewall many times. Therefore, the matching frequency (e.g. usage) of that rule is increased significantly and may trigger a decomposition process. In another example, traffic originating from a cloudlet may decrease significantly, and therefore the matching frequency of a rule(s) in the micro firewall may also decrease to trigger a composition process.

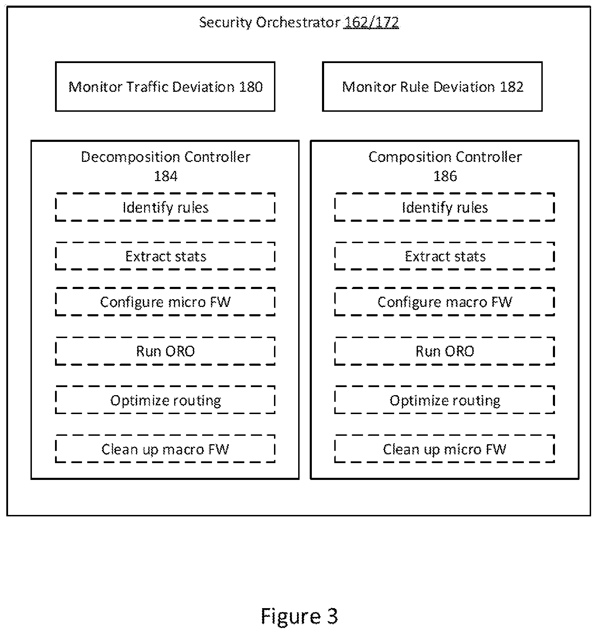

Figure 3 illustrates an example security orchestrator 162/172. The security orchestrator 162/172 can include a number of sub-components including Traffic Deviation Monitor 180, Rules Deviation Monitor 182, Decomposition Controller 184 and Composition Controller 186.

The Decomposition Controller 184 is configured to determine when to decompose the macro firewall rules into one or more micro firewall. It can monitor rules matching frequency deviation and traffic deviation to make such a determination. The Decomposition Controller 184 can evaluate the matching frequency of the rules and, if a deviation is detected for a rule, it can be outsourced to a particular cloudlet(s).

The Decomposition Controller 184 can be configured to implemented several subtasks which in some embodiments can be divided between the cloud and cloudlet. The decomposition process in the cloud domain can include: identifying the rules that should be outsourced from the macro firewall to a cloudlet micro firewall; extracting the statistics corresponding to the identified rules; configuring a newly created micro firewall and calculating the new rule weights for the micro firewall; running the ORO algorithm for micro firewall to order the identified rules; optimizing the routing paths in the cloud (e.g. in some situations the traffic treated by the micro firewall may not need to pass through the macro firewall); and cleaning-up the macro firewall if rules have been outsourced to the micro firewall. The decomposition process in the cloudlet domain can include: creating (e.g. instantiating, launching) and configuring the micro firewall; and optimizing the routing paths in the cloudlet with respect to the micro firewall.

The Composition Controller 186 is configured to determine when to combine, or recombine, a micro and macro firewall. When a subset of rules has been outsourced to a cloudlet, there may be no information related to rules matching frequency on the cloud side, as the accepted traffic has been bypassed from macro firewall and also the denied traffic is managed by micro firewall. Thus, this information should be obtained from the cloudlet manager. The Composition Controller 186 at the cloud can receive statistics associated with rules or traffic information from the cloudlet. When some deviation is observed beyond a threshold (e.g. decrease in traffic load, decrease in rule matching, end of agreement between cloud and cloudlet, etc.) the composition process is called to outsource all, or a subset of, the rules from the cloudlet micro firewall back to the cloud macro firewall. The micro firewall in cloudlet can then be eliminated if all rules are transferred to the macro firewall.

For the composition process, the composition controller 186 is configured to outsource all, or part of, a micro firewall rule set from a cloudlet domain to the macro firewall in the cloud domain. The composition process in the cloudlet domain can include: identifying the rules for extraction to the cloud; extracting statistics for the identified rules; optimizing the routing paths in the cloudlet; and cleaning-up the micro firewall (if it still exists) which can include removing the micro firewall (if all rules are outsourced). The composition process in the cloud domain can include: configuring the macro firewall with the received rules and calculating new (modified) rule weights in the macro firewall; running the ORO algorithm in macro firewall; and optimizing the routing paths in the cloud.

Statistics and information related to each cloudlet's hit/matching frequency for each rule can be compiled and stored in the macro firewall. One particular rule may have dependency on some other rule(s). If only a frequently fired rule is selected for outsourcing, it may create an anomaly in the micro firewall. Thus, all the rule dependencies should be considered to be outsourced with the highly frequent fired rule.

The rules in the macro firewall can be partitioned into three mutually exclusive subsets of rules, with respect to a specific domain (e.g. cloudletl): RS-general, RS-cloudletl, and RS-others. The "RS-general" ruleset consists of the general rules which are applied for all traffic associated with all domains (e.g. all cloudlets). The "RS-cloudletl" ruleset includes the rules which are used only for traffic associated with cloudletl, while the "RS-others" ruleset is related to the traffic associated with all cloudlets except for cloudletl. These rulesets can be referred to as "disjoint" or "mutually exclusive" subsets as there is no overlap between the subsets.

The partition of the full set of rules into disjoint sets of general and specific rules for the micro firewall(s) is maintained in the macro and micro firewalls throughout composition and decomposition. These subsets are handled differently during the composition and decomposition processes. For illustrative purposes, embodiments will be described with only one disjoint rule set per cloudlet. This approach can be easily generalized by applying the same treatment for all disjoint rule sets.

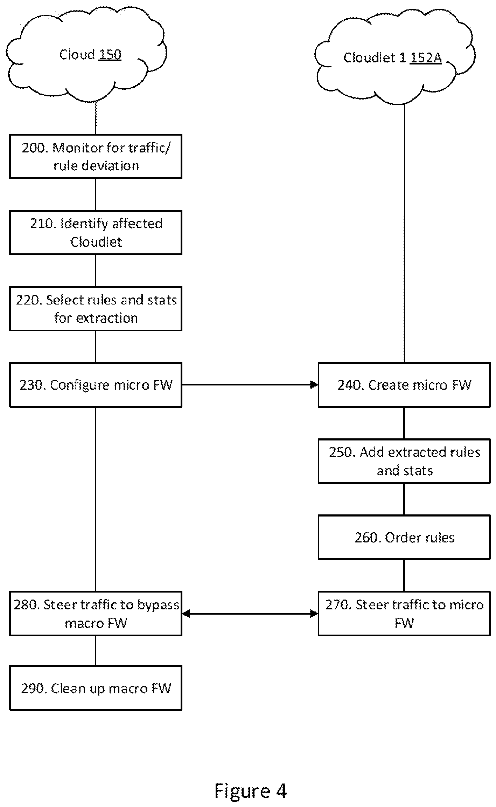

Figure 4 is a flow chart illustrating an example firewall decomposition process.

It will be appreciated by those skilled in the art that the "decomposition" process as described herein refers to mechanisms for outsourcing rules from a first firewall in a first domain (e.g. a macro firewall in a cloud domain) and installing these rules in a second firewall in a second domain (e.g. a micro firewall in a cloudlet domain). In other words, a centralized macro firewall can be "decomposed" into one or more distributed micro firewalls. In some embodiments the second firewall may need to be created prior to installing the extracted rules.

The example of Figure 4 describes some steps as implemented in the cloud 150 domain and other steps implemented in the cloudlet1 152A domain. It will be appreciated that one or more of these steps can be performed simultaneously and/or in a different order and/or by an entity in a different domain.

In step 200, the cloud 150 security orchestrator monitors for traffic/rules deviation to trigger a macro firewall decomposition. Two types of rule deviation can be considered: general rule deviations and cloudlet rule deviations. If the deviation is related to a general rule, it needs to be determined which cloudlet(s) are firing this general rule. Then, this general rule can be outsourced to the appropriate cloudlet(s). When a rule or a set of rules are hit too often from a cloudlet, the cloudlet related rules can be outsourced to the firewall instance created in this cloudlet. The decomposition controller needs to distinguish between a cloud-specific rule deviation or cloudlet rule deviation. In step 210, the cloudlet (e.g. cloudlet 1 152A) associated with the observed deviation is identified and selected for hosting a micro firewall.

The cloud 150 security orchestrator can then select the rules for extraction to cloudlet 1 152A in step 220. In some embodiments, the rules can include a first subset to be duplicated from the macro firewall to the micro firewall (e.g. RS-general) and a second subset to be removed from the macro firewall and added to the micro firewall (e.g. RS-cloudlet1). Note that when cloudlet-specific rules are exported, they can be exported in the appropriate order and with the general rules.

After the appropriate rules are selected for extraction, the associated rule statistics can also be extracted. The cloudlet specific rules are fired only by that specific cloudlet, so they do not need to be verified. In contrast, the general rules are fired by all cloudlets and so it is necessary to determine the matching frequency for the general rules with respect to the destination cloudlet.

In step 230, the cloud 150 security orchestrator instructs cloudlet 1 152A to create a virtual machine for the micro firewall and, accordingly, the cloudlet 1 152A security orchestrator can give full-access permission of that newly created micro firewall to the cloud. After, or as part of, the creation of the new micro firewall in step 240, the cloudlet 1 152A security orchestrator can configure it by adding the rulesets (e.g. RS-general and RS-cloudlet1) in step 250. The rules can be inserted in the micro firewall with their associated statistics.

As previously discussed, the treatment of these rules and their statistics differ whether they are part of RS-general or RS-cloudlet1. The full rule statistics for RS-general are not specific to cloudlet 1 152A (as they relate to the usage of the general rules by all cloudlets). Therefore, these statistics need to be processed prior to being used to configure the micro firewall at cloudlet 1 152A. In contrast, the statistics for RS-cloudlet1 are specific to cloudlet1, therefore these statistics can be transferred directly to the micro firewall. In some embodiments, the exported statistics for RS-general can be filtered to reflect only the usage of the general rules by cloudlet 1 152A associated traffic. This filtering can be applied at the cloud 150 domain prior to exporting the statistics (e.g. in step 220) or, alternatively, can be performed at the cloudlet 1 152A domain after the exported statistics have been received (e.g. in steps 240/250).

Step 260 is related to ordering the rules and optimizing the micro firewall. The extracted rules for the micro firewall can be placed in an ordered list in accordance with their associated usage statistics. It is noted that the rules statistics can be monitored and calculated in order to recognize the relative frequency of each rule matching the traffic processed by the firewall. This process can be performed in regular intervals in both the macro firewall and micro firewalls. Whenever new rules are inserted in a micro firewall, the entire rule set can be re-ordered to optimize efficiency.

In steps 270 and 280 traffic is steered to and from the micro firewall. The cloud 150 and cloudlet 1 152A should synchronize traffic routing associated with the new micro firewall such that it bypasses the macro firewall. Responsive to the new micro firewall being created the cloudlet1, three optimal networking paths can be determined: (1) the optimal path from/to cloudlet1 ingress port to micro firewall, (2) the optimal path from/to micro firewall to cloudlet1 egress port, and (3) the optimal path from cloud ingress port to cloud application by bypassing the macro firewall. When the optimal paths have been identified, the micro firewall can be activated. In steps 270 and 280 the optimal paths can be activated and the previous routing paths removed. At this point, traffic arriving at cloudlet 1 152A can be verified by the micro firewall in cloudlet 1 152A and, thus, the allowed traffic is bypassed from the macro firewall in cloud 150.

In step 290, the macro firewall can be cleaned up and any unneeded rules and/or statistics removed. Note that this cleaning can be performed differently for the different rulesets RS-general and RS-cloudlet1. All rules belonging to the set RS-cloudlet1 can now be removed from the macro firewall. The statistics associated with RS-cloudlet1 rules can also be removed from the macro firewall. The rules in set RS-general continue to exist in the macro firewall, however, and in some embodiments, the associated statistics can be modified as required. For example, a synchronization mechanism can be implemented for the rules in RS-general. When a new rule (or modified rule) is added to RS-general in the macro firewall, it can also be added to the RS-general at the micro firewall(s). Similarly, statistics for new rules in RS-general can be synchronized between the macro and micro firewalls.

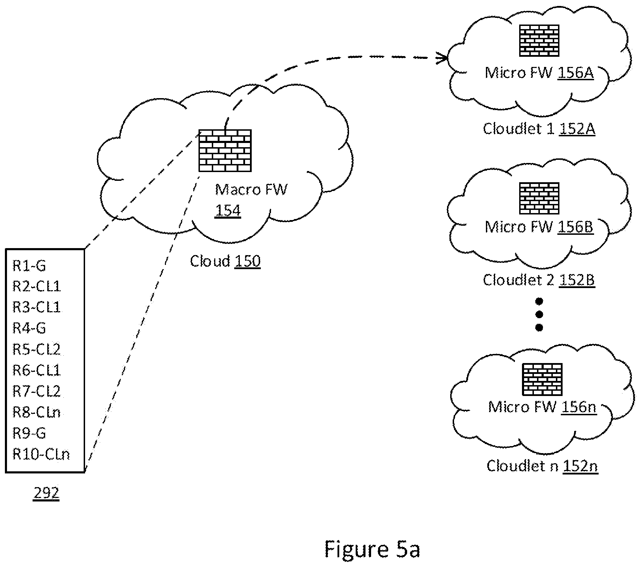

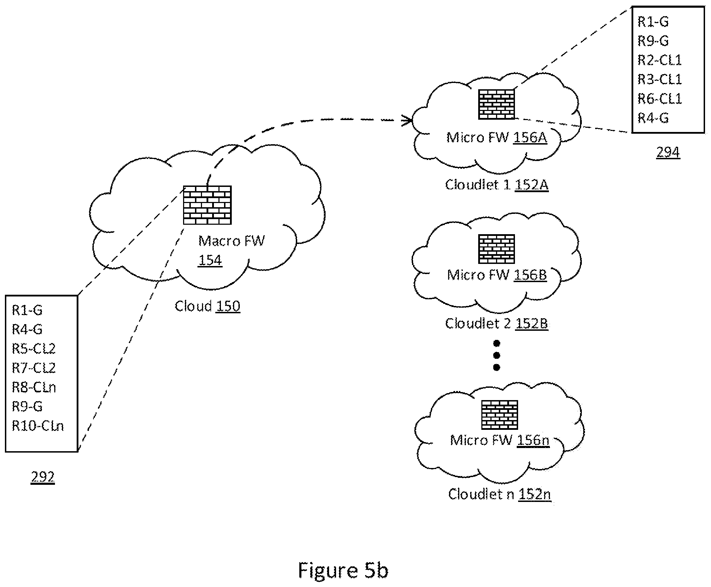

Figures 5a and 5b illustrate an example decomposed rule set. Beginning at a first point in time, Figure 5a shows the example ordered ruleset 292 at the macro firewall 154. Ruleset 292 include several disjoint subsets of rules: RS-general {R1, R4, R9}, RS-cloudlet1 {R2, R3, R6}, RS-cloudlet2 {R5, R7}, RS-cloudletn {R8, R10}. In this example, R1-G could represent one single firewall rule or a group of rules (e.g. dependent rules) that should be kept together. It will be assumed that the order of the rules in ruleset 292 is based on their current usage statistics.

At a later point in time, cloud 150 observes a traffic/rule deviation and determines to launch a new micro firewall 156A in cloudlet 1 152A. The rules to be exported for the new micro firewall include the general ruleset RS-general and the cloudlet specific ruleset RS-cloudletl.

Figure 5b illustrates the modified ruleset 292 at the macro firewall 154 and the new ruleset 294 for micro firewall 156A following the launch of the micro firewall 156A. It is noted that the rules from RS-cloudletl have been removed from ruleset 292 while the RS-general rules remain. The rules in ruleset 292 have been re-ordered appropriately.

Ruleset 294 at micro firewall 156A includes RS-general and RS-cloudlet1. For the purpose of this example, it will be assumed that rule R9-G was being used at a high frequency by traffic associated with cloudlet 1 152A and triggered the decomposition process. Accordingly, when the exported rules of ruleset 294 are ordered/re-ordered for micro firewall 156A, rule R9-G has moved up the ordered list.

Similarly, it will be assumed for this example, that rule R6-CL1 has higher usage statistics than rule R4-G, as the statistics apply to cloudlet 1 152A traffic. As such, rule R6-CL1 has also moved up the ordered list in ruleset 294.

In some embodiments, the usage statistics for cloudlet 1 152A can be removed from the general rules RS-general that are maintained at the macro firewall 154. In other embodiments, these usage statistics can be synchronized between macro firewall 154 and micro firewall 156A. The order of the rulesets 292 and 294 can be determined appropriately, and in some embodiments iteratively, as required.

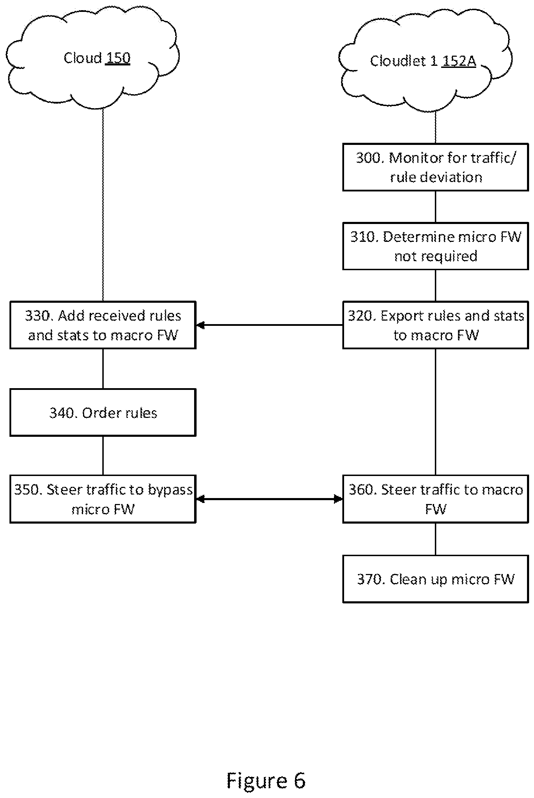

Figure 6 is a flow chart illustrating an example firewall composition process.

It will be appreciated by those skilled in the art that the "composition" process as described herein refers to mechanisms for merging rules from a second firewall in a second domain (e.g. a micro firewall in a cloudlet domain) with a first firewall in a first domain (e.g. a macro firewall in a cloud domain). In other words, one or more distributed micro firewalls can be "composed" into a centralized macro firewall.

The example of Figure 6 describes some steps as implemented in the cloud 150 domain and other steps implemented in the cloudlet 1 152A domain. It will be appreciated that one or more of these steps can be performed simultaneously and/or in a different order and/or by an entity in a different domain.

In step 300, the cloudlet 1 152A security orchestrator monitors for traffic/rules deviation to trigger a micro firewall composition, or re-composition process. Again, two types of rule deviation can be considered: general rule deviations and cloudlet rule deviations. In step 310, it is determined that the micro firewall located in cloudlet 1 152A is no longer required. In some embodiments, traffic and/or rule usage statistic thresholds can be used to make this determination. This will trigger the composition process to remove the micro firewall at cloudlet 1 152A and move rules, as required, to the macro firewall located in cloud 150.

In step 320, the micro firewall rules and statistics are analyzed to determine which rules and/or statistics are to be transferred to the macro firewall. In a first case, if the micro firewall ruleset includes general rules (e.g. RS-general), then only the statistics from the micro firewall will be transferred to the macro firewall for these general rules. It is noted that the order of the rules in RS-general at the micro firewall may not impact the current order of rules in RS-general at the macro firewall. The RS-general rules at the macro firewall can be ordered based on the traffic from several other cloudlet domains (and excluding traffic from the cloudlet 1 152A micro firewall, as its traffic has been bypassing the macro firewall). In a second case, if the micro firewall ruleset includes cloudlet-specific rules (e.g. RS-cloudlet1), then both the subset of rules RS-cloudlet1 and its associated statistics are transferred to the macro firewall at the cloud 150.

For further explanation of the differentiated treatment of rules, it is assumed that the micro firewall can comprise both general and specific rules. Since the general rules are duplicated on the macro firewall, they do not need to be transferred back to the macro firewall. The general ruleset in all distributed firewalls can be synchronized whenever it is modified on either a macro or a micro firewall. In other words, if a general rule is inserted (or removed) in the macro firewall, then this rule should also be inserted (or removed) on all the micro firewalls existing in all cloudlets. Moreover, if a general rule is inserted in a micro firewall, at the same time, this rule can be inserted in the macro firewall, and synchronized with other micro firewalls as required.

For cloudlet-specific rules, it is assumed that these rules and statistics have been fully outsourced to the micro firewall. As such, all information pertaining to RS-cloudlet1 should be transferred to the macro firewall in the composition process.

In step 330, the macro firewall can be configured by adding the received rules and statistics. The modified ruleset can then be re-ordered in accordance with the statistics, in step 340, to optimize the macro firewall.

In steps 350 and 360 traffic is steered away from the micro firewall and to the macro firewall. The cloud 150 and cloudlet 1 152A should synchronize traffic routing associated with the cloudlet 1 152A domain such that it is handles by the macro firewall and bypasses the micro firewall. In steps 350 and 360 the optimal paths can be activated and the previous routing paths removed.

In step 370 the micro firewall can be cleaned up. After transferring all rules and/or statistics and configuring the traffic routing, the micro firewall is no longer needed and can be removed.

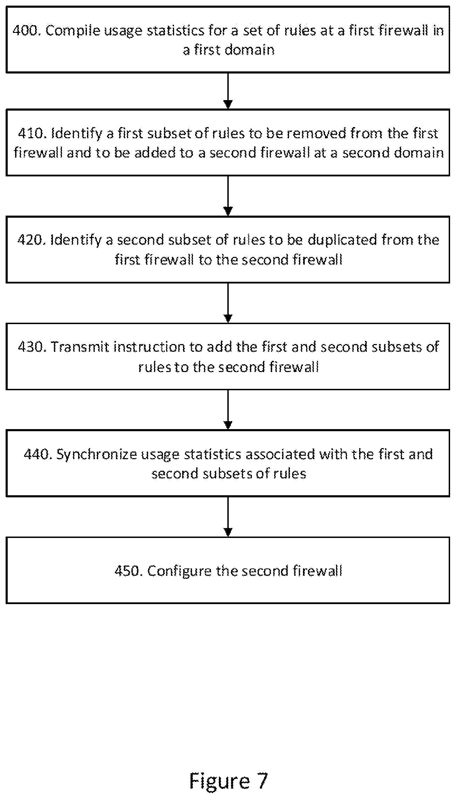

Figure 7 is a flow chart illustrating a method for managing firewall rules. The method of Figure 7 can be implemented by a firewall management device or entity such as the cloud/cloudlet manager, cloud/cloudlet orchestrator or security orchestrator components as have been described herein. The method of Figure 7 can be used to manage a distributed firewall system comprising a plurality of firewall devices located in a plurality of network domains.

The method includes compiling usage statistics, at a first firewall device in a first domain, for each rule in a set of rules (block 400). Usage statistics can include a count of the number of hits or matches for each rule. The usage statistics can further include other information such as traffic characteristics or network location (e.g. traffic associated with which domain) that has matched the rule. The complied usage statistics for the rules can be stored at the first firewall device or, alternatively, can be accessible by the first firewall device. The usage statistics can be used by the first firewall device to order the rules in the set. The order can reflect the accumulated frequency of use, dependencies on other rule(s) and/or other factors.

In some embodiments, traffic and/or rule usage is monitored for any deviation from the expected behavior. In some embodiments, it is determined that a second firewall device is required in a second domain, different from the first domain. The determination that a second firewall device is required can be made in response to detecting at least one of a traffic variation and/or a rule matching variation associated with the second domain. The deviation can be observed with respect to one or more predetermined threshold conditions.

A first subset of rules is identified to be removed from the first firewall device and to be added to a second firewall device in a second domain (block 410). The first subset of rules can be identified in accordance with being uniquely associated with traffic associated with the second domain. In some embodiments, at least one rule in the first subset can be associated with a detected traffic/rule deviation.

A second subset of rules is identified to be duplicated from the first firewall device to the second firewall device (block 420). The second subset of rules can be identified in accordance with being common to all of the firewall devices and/or all of the plurality of domains in the network. In some embodiments, at least one rule in the second subset can be associated with a detected traffic/rule deviation.

An instruction is transmitted to add (e.g. insert or install) the first and second subsets of rules at the second firewall device in the second domain (block 430). The first and second subsets of rules can be transmitted to the second firewall device with the instruction or in a separate communication.

The usage statistics associated with first and second subsets of rules are then synchronized between the first firewall device and the second firewall device (block 440). The statistics can be synchronized such that only statistics associated with the use of the first and second subsets by the second domain are transferred to the second firewall device. Accordingly, statistics can be synchronized such that the statistics associated with the use of the first and second subsets by the second domain are removed from the first firewall device.

In some embodiments, the usage statistics associated with the rules in the first and second subset can be transmitted to the second firewall device. In some embodiments, the transmitted usage statistics for the first subset of rules includes the entire set of statistics for the rules in that first subset. In some embodiments, the usage statistics associated with the first subset are transferred to the second firewall device and removed from the first firewall device.

In some embodiments, the usage statistics associated with the second subset of rules can be modified prior to being transmitted to the second firewall device. The statistics associated with the second subset can be filtered to remove any statistics associated with usage/matching of these rules by any domain other than the second domain. In other words, the statistics for the second subset that are transmitted to the second firewall device will pertain only to usage of the second subset of rules by traffic associated with the second domain. Similarly, the statistics for the second subset that are stored at the first firewall can be modified to remove the statistics associated with traffic from the second domain. As such, the modified statistics for the second subset, as stored by the first firewall, will only reflect usage of these rules by domains other than the second domain. The transferred statistics for the second subset, transmitted to the second firewall, will only reflect usage of these rules by the second domain.

The second firewall device can then be configured (block 450). Configuration of the second firewall can include creating (e.g. launching, instantiating, etc.) the second firewall device at the second domain. In some embodiments, configuring the second firewall device can include ordering the rules (e.g. the combined list of rules of the transferred first and second subsets) at the second firewall device in accordance with the synchronized usage statistics.

In some embodiments, the method of Figure 7 can optionally include transmitting an instruction to remove the first subset of rules from the first firewall device. The set of rules at the first firewall device can further be reordered in accordance with the synchronized usage statistics.

In some embodiments, the first firewall device can be a centralized firewall and the second firewall device can be a distributed firewall.

It will be appreciated that one or more of the above steps can be performed simultaneously and/or in a different order. Some steps may be optional and can be omitted in some embodiments.

Embodiments are provided for decomposing a macro firewall into one or more "smaller" micro firewalls, and for composing one or more micro firewalls into a macro firewall. This approach is based on partitioning of the rule set of a macro firewall into smaller, targeted rule sets. The partition of the rule sets can be based on internal and/or external measures. For example, traffic characteristics can be considered as external measures and rule matching frequencies can be considered as internal measures. The firewall rule set can be dynamically decomposed among the micro firewalls for improved load distribution and more efficient implementation of security policies.

Some embodiments provide for a differentiated treatment of the rules and their associated statistics according to their types (e.g. a general rule or a domain-specific rule) when exporting rules from macro to micro firewalls, or importing them from micro to macro firewalls. This approach allows for preserving the statistics for different rule types during the composition and decomposition processes.

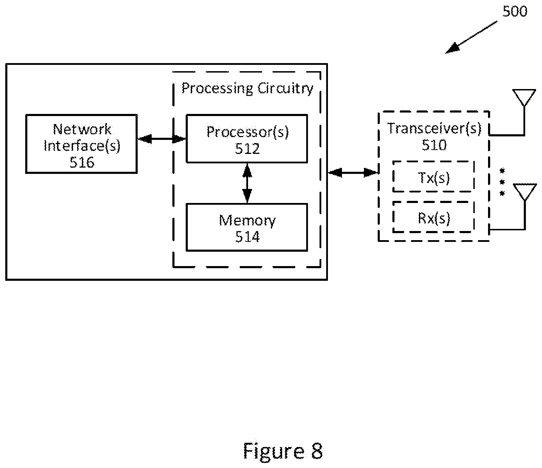

Figure 8 is a block diagram of an exemplary firewall management device or entity 500, in accordance with certain embodiments. Firewall manager 500 can be one or more of the cloud manager, cloud orchestrator and/or security orchestrator devices as have been described herein. Firewall manager 500 may include one or more of a transceiver 510, processor 512, memory 514, and network interface 516. In some embodiments, the optional transceiver 510 facilitates transmitting wireless signals to and receiving wireless signals from other network nodes and devices (e.g. via transmitter(s) (Tx), receiver(s) (Rx), and antenna(s)). The processor 512 executes instructions to provide some or all of the functionalities described above as being provided by a firewall manager 500, the memory 514 stores the instructions executed by the processor 512. In some embodiments, the processor 512 and the memory 514 form processing circuitry. The network interface 516 communicates signals to other network components, such as a gateway, switch, router, Internet, Public Switched Telephone Network (PSTN), core network nodes or radio network controllers, etc.

The processor 512 may include any suitable combination of hardware to execute instructions and manipulate data to perform some or all of the described functions of firewall management device 500, such as those described above. In some embodiments, the processor 512 may include, for example, one or more computers, one or more central processing units (CPUs), one or more microprocessors, one or more application specific integrated circuits (ASICs), one or more field programmable gate arrays (FPGAs) and/or other logic.

The memory 514 is generally operable to store instructions, such as a computer program, software, an application including one or more of logic, rules, algorithms, code, tables, etc. and/or other instructions capable of being executed by a processor. Examples of memory 514 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, the network interface 516 is communicatively coupled to the processor 512 and may refer to any suitable device operable to receive input for firewall manager 500, send output from firewall manager 500, perform suitable processing of the input or output or both, communicate to other devices, or any combination of the preceding. The network interface 516 may include appropriate hardware (e.g., port, modem, network interface card, etc.) and software, including protocol conversion and data processing capabilities, to communicate through a network.

Other embodiments of firewall manager 500 may include additional components beyond those shown in Figure 8 that may be responsible for providing certain aspects of the device's functionalities, including any of the functionalities described above and/or any additional functionalities (including any functionality necessary to support the solutions described above). The various different types of devices may include components having the same physical hardware but configured (e.g., via programming) to support different communication or network technologies, or may represent partly or entirely different physical components.

Processors, interfaces, and memory similar to those described with respect to Figure 8 may be included in other network nodes described herein. Other network nodes may optionally include or not include a wireless interface (such as the transceiver 510).

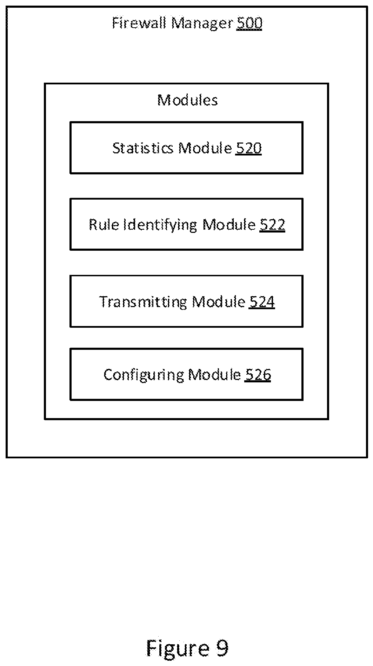

In some embodiments, the firewall manager 500 may comprise a series of modules configured to implement the various functionalities of firewall manager 500 described herein. Referring to Figure 9, in some embodiments, the firewall manager 500 may comprise a statistics module 520 for compiling usage statistics for each rule in a set of rules at a first firewall device in a first domain; a rule identifying module 522 for identifying a first subset of rules to be removed from the first firewall device and to be added to a second firewall device in a second domain, and for identifying a second subset of rules to be duplicated from the first firewall device to the second firewall device; a transmitting module for transmitting instruction to insert the first and second subsets of rules at the second firewall device, and a configuring module 526 for configuring the second firewall device. In some embodiments, statistics module 520 is configured to synchronize usage statistics associated with the first and second subsets of rules between the first firewall device and the second firewall device.

It will be appreciated that the various modules may be implemented as combination of hardware and software, for instance, the processor, memory and transceiver(s) of firewall manager 500 shown in Figure 8. Some embodiments may also include additional modules to support additional and/or optional functionalities.

Some embodiments may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause processing circuitry (e.g. a processor) to perform steps in a method according to one or more embodiments. Those of ordinary skill in the art will appreciate that other instructions and operations necessary to implement the described embodiments may also be stored on the machine-readable medium. Software running from the machine-readable medium may interface with circuitry to perform the described tasks.

The above-described embodiments are intended to be examples only. Alterations, modifications and variations may be effected to the particular embodiments by those of skill in the art without departing from the scope of the description.

## Claims

1. A method for managing firewall rules in a distributed firewall system comprising a plurality of firewall devices (154; 156A-156n) in a plurality of network domains (154; 152A-152n), the method comprising:
compiling (400) usage statistics for each rule in a set of rules at a first firewall device (154) in a first domain (150);
identifying (410), based on the compiled usage statistics, a first subset of rules to be removed from the first firewall device (154) and to be added to a second firewall device (156A-156n) in a second domain (152A-152n);
identifying (420), based on the compiled usage statistics, a second subset of rules to be duplicated from the first firewall device (154) to the second firewall device (156A-156n);
transmitting (430) an instruction to add the first and second subsets of rules to the second firewall device (156A-156n);
synchronizing (440) usage statistics associated with the first and second subsets of rules between the first firewall device (154) and the second firewall device (156A-156n); and
configuring (450) the second firewall device (156A-156n),
wherein the first subset of rules is identified in accordance with being uniquely associated with traffic associated with the second domain (152A-152n), and
wherein synchronizing usage statistics includes modifying the usage statistics associated with the second subset of rules, stored at the first firewall device (154), to remove usage statistics uniquely associated with traffic associated with the second domain (152A-152n).

2. The method of claim 1, further comprising determining that the second firewall device (156A-156n) is required in the second domain (152A-152n).

3. The method of claim 2, wherein determining that the second firewall device (156A-156n) is required in the second domain (152A-152n) is responsive to detecting at least one of a traffic variation and a rule matching variation associated with the second domain (152A-152n).

4. The method of any of claims 1 to 3, wherein the second subset of rules is identified in accordance with being common to all of the firewall devices (154; 156A-156n) in the network.

5. The method of any of claims 1 to 4, wherein synchronizing usage statistics includes transmitting the usage statistics associated with the first subset of rules to the second firewall device (156A-156n).

6. The method of any of claims 1 to 5, wherein synchronizing usage statistics includes removing the usage statistics associated with first subset of rules from the first firewall device (154).

7. The method of any of claims 1 to 6, wherein synchronizing usage statistics includes transmitting, to the second firewall device (156A-156n), usage statistics associated with the second subset of rules uniquely associated with traffic associated with the second domain (152A-152n).

8. The method of any of claims 1 to 7, wherein configuring the second firewall device (156A-156n) includes creating the second firewall device (156A-156n) at the second domain (152A-152n).

9. The method of any of claims 1 to 8, wherein configuring the second firewall device (156A-156n) includes configuring an order of the rules at the second firewall device (156A-156n) in accordance with the synchronized usage statistics.

10. The method of any of claims 1 to 9, further comprising transmitting an instruction to remove the first subset of rules from the first firewall device (154) and, optionally, reordering the set of rules at the first firewall device (154) in accordance with the synchronized usage statistics.

11. The method of any of claims 1 to 10, wherein the first firewall device (154) is a centralized firewall and the second firewall device (156A-156n) is a distributed firewall.

12. A firewall manager (500) comprising circuitry including a processor (512) and a memory (514), the memory (514) containing instructions executable by the processor (512) whereby the firewall manager (500) is operative to perform the method of any of claims 1 to 11.

13. A computer readable storage medium storing executable instructions, which when executed by a processor, cause the processor to perform the method of any of claims 1 to 11.

## Patentansprüche

1. Verfahren zum Verwalten von Firewall-Regeln in einem verteilten Firewall-System, das mehrere Firewall-Vorrichtungen (154; 156A-156n) in mehreren Netzwerkdomänen (154; 152A-152n) umfasst, wobei das Verfahren umfasst:
Erstellen (400) von Nutzungsstatistiken für jede Regel in einem Satz von Regeln in einer ersten Firewall-Vorrichtung (154) in einer ersten Domäne (150);
Identifizieren (410), auf der Grundlage der erstellten Nutzungsstatistiken, einer ersten Teilmenge von Regeln, die aus der ersten Firewall-Vorrichtung (154) entfernt und einer zweiten Firewall-Vorrichtung (156A-156n) in einer zweiten Domäne (152A-152n) hinzugefügt werden sollen;
Identifizieren (420), auf der Grundlage der zusammengestellten Nutzungsstatistiken, einer zweiten Teilmenge von Regeln, die von der ersten Firewall-Vorrichtung (154) zu der zweiten Firewall-Vorrichtung (156A-156n) dupliziert werden sollen;
Senden (430) einer Instruktion zum Hinzufügen der ersten und zweiten Teilmenge von Regeln an die zweite Firewall-Vorrichtung (156A-156n);
Synchronisieren (440) von Nutzungsstatistiken, die mit der ersten und der zweiten Teilmenge von Regeln verknüpft sind, zwischen der ersten Firewall-Vorrichtung (154) und der zweiten Firewall-Vorrichtung (156A-156n); und
Konfigurieren (450) der zweiten Firewall-Vorrichtung (156A-156n),
wobei die erste Teilmenge von Regeln anhand des Umstandes identifiziert wird, dass sie eindeutig mit Verkehr verknüpft ist, der mit der zweiten Domäne (152A-152n) verknüpft ist, und
wobei das Synchronisieren von Nutzungsstatistiken das Modifizieren der Nutzungsstatistiken umfasst, die mit der zweiten Teilmenge von Regeln verknüpft sind, die in der ersten Firewall-Vorrichtung (154) gespeichert sind, um Nutzungsstatistiken zu entfernen, die eindeutig mit dem Verkehr verknüpft sind, der mit der zweiten Domäne (152A-152n) verknüpft ist.

2. Verfahren nach Anspruch 1, das des Weiteren das Bestimmen umfasst, dass die zweite Firewall-Vorrichtung (156A-156n) in der zweiten Domäne (152A-152n) benötigt wird.

3. Verfahren nach Anspruch 2,
wobei das Bestimmen, dass die zweite Firewall-Vorrichtung (156A-156n) in der zweiten Domäne (152A-152n) benötigt wird, in Reaktion auf das Detektieren von mindestens einem von einer Verkehrsvariation und einer Regelabgleichsvariation, die mit der zweiten Domäne (152A-152n) verknüpft sind, erfolgt.

4. Verfahren nach einem der Ansprüche 1 bis 3,
wobei die zweite Teilmenge von Regeln anhand des Umstandes identifiziert wird, dass sie allen Firewall-Vorrichtungen (154; 156A-156n) in dem Netzwerk gemeinsam ist.

5. Verfahren nach einem der Ansprüche 1 bis 4,
wobei das Synchronisieren von Nutzungsstatistiken das Senden der Nutzungsstatistiken, die mit der ersten Teilmenge von Regeln verknüpft sind, an die zweite Firewall-Vorrichtung (156A-156n) umfasst.

6. Verfahren nach einem der Ansprüche 1 bis 5,
wobei das Synchronisieren von Nutzungsstatistiken das Entfernen der Nutzungsstatistiken, mit der ersten Teilmenge von Regeln verknüpft sind, aus der ersten Firewall-Vorrichtung (154) umfasst.

7. Verfahren nach einem der Ansprüche 1 bis 6,
wobei das Synchronisieren von Nutzungsstatistiken das Senden, an die zweite Firewall-Vorrichtung (156A-156n), von Nutzungsstatistiken umfasst, die mit der zweiten Teilmenge von Regeln verknüpft sind, die eindeutig mit Verkehr verknüpft sind, der mit der zweiten Domäne (152A-152n) verknüpft ist.

8. Verfahren nach einem der Ansprüche 1 bis 7,
wobei das Konfigurieren der zweiten Firewall-Vorrichtung (156A-156n) das Erzeugen der zweiten Firewall-Vorrichtung (156A-156n) in der zweiten Domäne (152A-152n) umfasst.

9. Verfahren nach einem der Ansprüche 1 bis 8,
wobei das Konfigurieren der zweiten Firewall-Vorrichtung (156A-156n) das Konfigurieren einer Reihenfolge der Regeln in der zweiten Firewall-Vorrichtung (156A-156n) gemäß den synchronisierten Nutzungsstatistiken umfasst.

10. Verfahren nach einem der Ansprüche 1 bis 9, das des Weiteren das Senden einer Instruktion zum Entfernen der ersten Teilmenge von Regeln aus der ersten Firewall-Vorrichtung (154) und optional das Neuordnen des Satzes von Regeln in der ersten Firewall-Vorrichtung (154) gemäß den synchronisierten Nutzungsstatistiken umfasst.

11. Verfahren nach einem der Ansprüche 1 bis 10,
wobei die erste Firewall-Vorrichtung (154) eine zentralisierte Firewall ist und die zweite Firewall-Vorrichtung (156A-156n) eine verteilte Firewall ist.

12. Firewall-Manager (500), der eine Schaltung umfasst, die einen Prozessor (512) und einen Speicher (514) enthält, wobei der Speicher (514) Instruktionen enthält, die durch den Prozessor (512) ausgeführt werden können, wodurch der Firewall-Manager (500) befähigt wird, das Verfahren nach einem der Ansprüche 1 bis 11 auszuführen.

13. Computerlesbares Speichermedium, das ausführbare Instruktionen speichert, die, wenn sie durch einen Prozessor ausgeführt werden, den Prozessor veranlassen, das Verfahren nach einem der Ansprüche 1 bis 11 auszuführen.

## Revendications

1. Procédé de gestion de règles de pare-feu dans un système de pare-feu distribué comprenant une pluralité de dispositifs de pare-feu (154 ; 156A-156n) dans une pluralité de domaines de réseau (154 ; 152A-152n), le procédé comprenant :
la compilation (400) de statistiques d'utilisation pour chaque règle dans un ensemble de règles au niveau d'un premier dispositif de pare-feu (154) dans un premier domaine (150) ;
l'identification (410), sur la base des statistiques d'utilisation compilées, d'un premier sous-ensemble de règles à supprimer du premier dispositif de pare-feu (154) et à ajouter à un deuxième dispositif de pare-feu (156A-156n) dans un deuxième domaine (152A-152n) ;
l'identification (420), sur la base des statistiques d'utilisation compilées, d'un deuxième sous-ensemble de règles à dupliquer du premier dispositif de pare-feu (154) au deuxième dispositif de pare-feu (156A-156n) ;
la transmission (430) d'une instruction d'ajouter les premier et deuxième sous-ensembles de règles au deuxième dispositif de pare-feu (156A-156n) ;
la synchronisation (440) de statistiques d'utilisation associées aux premier et deuxième sous-ensembles de règles entre le premier dispositif de pare-feu (154) et le deuxième dispositif de pare-feu (156A-156n) ; et
la configuration (450) du deuxième dispositif de pare-feu (156A-156n),
dans lequel le premier sous-ensemble de règles est identifié en fonction du fait qu'il est associé de manière unique à un trafic associé au deuxième domaine (152A-152n), et
dans lequel la synchronisation de statistiques d'utilisation inclut la modification des statistiques d'utilisation associées au deuxième sous-ensemble de règles, stockées au niveau du premier dispositif de pare-feu (154), pour supprimer des statistiques d'utilisation associées de manière unique à un trafic associé au deuxième domaine (152A-152n) .

2. Procédé selon la revendication 1, comprenant en outre la détermination que le deuxième dispositif de pare-feu (156A-156n) est requis dans le deuxième domaine (152A-152n).

3. Procédé selon la revendication 2,
dans lequel la détermination que le deuxième dispositif de pare-feu (156A-156n) est requis dans le deuxième domaine (152A-152n) est en réponse à la détection d'au moins l'une parmi une variation de trafic et une variation de concordance de règle associée au deuxième domaine (152A-152n).

4. Procédé selon l'une quelconque des revendications 1 à 3,
dans lequel le deuxième sous-ensemble de règles est identifié en fonction du fait qu'il est commun à tous les dispositifs de pare-feu (154 ; 156A-156n) dans le réseau.

5. Procédé selon l'une quelconque des revendications 1 à 4,
dans lequel la synchronisation de statistiques d'utilisation inclut la transmission des statistiques d'utilisation associées au premier sous-ensemble de règles au deuxième dispositif de pare-feu (156A-156n).

6. Procédé selon l'une quelconque des revendications 1 à 5,
dans lequel la synchronisation de statistiques d'utilisation inclut la suppression des statistiques d'utilisation associées au premier sous-ensemble de règles du premier dispositif de pare-feu (154).

7. Procédé selon l'une quelconque des revendications 1 à 6,
dans lequel la synchronisation de statistiques d'utilisation inclut la transmission, au deuxième dispositif de pare-feu (156A-156n), de statistiques d'utilisation associées au deuxième sous-ensemble de règles associé de manière unique à un trafic associé au deuxième domaine (152A-152n) .

8. Procédé selon l'une quelconque des revendications 1 à 7,
dans lequel la configuration du deuxième dispositif de pare-feu (156A-156n) inclut la création du deuxième dispositif de pare-feu (156A-156n) au niveau du deuxième domaine (152A-152n).

9. Procédé selon l'une quelconque des revendications 1 à 8,
dans lequel la configuration du deuxième dispositif de pare-feu (156A-156n) inclut la configuration d'un ordre des règles au niveau du deuxième dispositif de pare-feu (156A-156n) en fonction des statistiques d'utilisation synchronisées.

10. Procédé selon l'une quelconque des revendications 1 à 9, comprenant en outre la transmission d'une instruction de supprimer le premier sous-ensemble de règles du premier dispositif de pare-feu (154) et, facultativement, la réorganisation de l'ensemble de règles au niveau du premier dispositif de pare-feu (154) en fonction des statistiques d'utilisation synchronisées.

11. Procédé selon l'une quelconque des revendications 1 à 10,
dans lequel le premier dispositif de pare-feu (154) est un pare-feu centralisé et le deuxième dispositif de pare-feu (156A-156n) est un pare-feu distribué.

12. Gestionnaire de pare-feu (500) comprenant une circuiterie incluant un processeur (512) et une mémoire (514), la mémoire (514) contenant des instructions exécutables par le processeur (512) de telle manière que le gestionnaire de pare-feu (500) soit fonctionnel pour réaliser le procédé selon l'une quelconque des revendications 1 à 11.

13. Support de stockage lisible par ordinateur stockant des instructions exécutables qui, lorsqu'elles sont exécutées par un processeur, amènent le processeur à réaliser le procédé selon l'une quelconque des revendications 1 à 11.
